# EUROPEAN PATENT APPLICATION

(11) **EP 4 393 691 A1**
(43) Date of publication of application: **03.07.2024**
(21) Application number: 23220807.4
(22) Date of filing: 29.12.2023
(51) Int. Cl.: B32B 1/00, B32B 27/08, B32B 27/32, B32B 27/34, B32B 27/36, C08J 5/18, H01M 50/105, H01M 50/126, H01M 50/129, B32B 15/08, B32B 15/085, B32B 15/088, B32B 15/09, B32B 15/20

(54) **POUCH FILM FOR SECONDARY BATTERY WITH EXCELLENT ROOM TEMPERATURE AND HIGH TEMPERATURE SEALING STRENGTH, METHOD FOR PREPARING THE POUCH FILM, SECONDARY BATTERY USING THE SAME AND METHOD FOR MANUFACTURING THE SECONDARY BATTERY**

(30) Priority: 30.12.2022 KR 20220191213
(71) Applicant: Youlchon Chemical Co., Ltd., Seoul 07057 (KR)
(72) Inventor: SONG, Nok Jung, 07057 Seoul (KR); HAN, Hee Sik, 15430 Ansan-si (KR); JANG, Jee Eun, 15430 Ansan-si (KR); KIM, Huihun, 15430 Ansan-si (KR)
(74) Representative: V.O.

(57) **Abstract**

A pouch film for a secondary battery, wherein at least an outer layer, a barrier layer, and a sealant layer are structured in this order, the sealant layer includes an extrusion (EC) layer and a polypropylene (PP) layer below the extrusion (EC) layer, having excellent sealing strength at ambient and high temperatures, and having excellent sealing strength maintenance properties at ambient and especially high temperatures, a method for preparing the pouch film, a secondary battery using the pouch film, and a method for manufacturing the same are disclosed. The pouch film for the secondary battery has excellent high temperature long-term reliability in battery pack manufacturing, and can be useful for medium to large-sized batteries.

## Description

### Technical Field

The present disclosure relates to a pouch film for secondary batteries having excellent ambient temperature and high temperature sealing strength, a method for preparing the pouch film, a secondary battery using the same, and a manufacturing method thereof. More particularly, the present disclosure relates to a pouch film for a secondary battery having excellent thermal bonding strength that is, sealing strength at ambient temperature and high temperature, and excellent sealing strength maintenance properties at ambient temperature and especially at high temperature, and thus having excellent high temperature long-term reliability when manufacturing a battery pack, a method for preparing the pouch film, a secondary battery using the same, and a manufacturing method thereof.

### [National Research and Development Project Supporting The Present Invention]

[Assignment unique number] 1415181922
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2022-09-01 ~ 2022-12-31
[Assignment unique number] 1415185612
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2023-01-01 ~ 2023-12-31

### Background Art

Lithium secondary batteries (LiB) are being applied to many applications based on various advantages such as high energy density and excellent output.

As a laminated film for encasing a secondary battery, with a multilayer structure that surrounds an electrode group and an electrolyte of the secondary battery, a secondary battery pouch film is a key component material that may determine the battery's stability, lifespan characteristics, and operational sustainability, and requires mechanical flexibility and strength, high oxygen/water vapor barrier properties, high heat sealing strength, chemical resistance to electrolyte solutions, electrical insulation, and high temperature stability, etc.

Secondary battery pouch films typically consist of an outer layer, a barrier layer, and a sealant layer inside.

The outer or outermost layer is composed of nylon or a blend of nylon and PET (polyethylene terephthalate), OPP (oriented polypropylene), polyethylene, and the like. The required properties of these outer layers or outermost layers include heat resistance, pinhole resistance, chemical resistance, formability, and insulation, etc.

The barrier layer requires formability as well as barrier properties against water vapor and other gases. In this respect, metals with formability such as aluminum (Al), iron (Fe), copper (Cu), and nickel (Ni) etc. are used in the barrier layer, and aluminum is currently used the most.

Since the sealant layer which is an inner layer is in contact with the electrolyte, it requires electrolyte resistance, and insulation resistance etc. as well as thermal adhesiveness and formability.

As the application of lithium secondary batteries (LiB) is expanded from small-sized to medium-sized to large-sized fields such as automobiles and/or energy storage systems (ESS), secondary battery pouch films also need characteristics suitable for such medium-sized to large-sized fields that require high safety.

Therefore, it is necessary for pouch films to have excellent sealing strength not only at ambient temperature and but especially at high temperature (60°C), and furthermore, it is necessary that the sealing strength be maintained and not deteriorated at ambient temperature and especially at high temperature, because these properties have a great impact on battery safety. Especially for pouch films used in medium-sized and large-sized secondary batteries, an explosion of the battery can lead to a fatal accident, so it is necessary to develop a secondary battery pouch film that can achieve battery safety.

### Disclosure of Invention

### Technical Problem

In exemplary embodiments of the present disclosure, in one aspect, an object is to provide a pouch film for a secondary battery which has excellent sealing strength at ambient temperature and excellent sealing strength at high temperature, as well as excellent sealing strength maintenance properties at the ambient temperature and especially at the high temperature, resulting in excellent high temperature long-term reliability when manufacturing battery packs, a method for preparing the same, a secondary battery using the same, and a manufacturing method thereof,.

### Solution to Problem

In exemplary embodiments of the present disclosure, provided are a secondary battery pouch film including a layered structure wherein at least an outer layer, a barrier layer, and a sealant layer are structured in that order, wherein the sealant layer is extrusion laminated by an extrusion (EC) layer, and wherein the maximum ambient temperature sealing strength measured value when sealed under 220°C sealing conditions as measured by a method below is 150 N/15 mm or more and 205 N/15 mm or less in both the MD and TD directions, and a method for preparing the secondary battery pouch film.

### [Method of measuring maximum sealing strength at ambient temperature when sealed under the condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength of a specimen in each of the MD and TD directions is measured at ambient temperature by a sealing strength meter, and the measurement is carried under a condition of a test speed of 10 mpm and a grip gap of 30 mm.

A maximum value of the sealing strength measurement values is a maximum sealing strength.

Furthermore, in exemplary embodiments of the present disclosure, there is provided a secondary battery pouch film comprising a layered structure wherein at least an outer layer, a barrier layer, and a sealant layer are structured in that order, wherein the sealant layer is extrusion laminated by an extrusion (EC) layer, and wherein the maximum high temperature sealing strength measured value (measured value of sealing strength after leaving at 60°C for 3 minutes) when sealed under 220°C sealing conditions as measured by the method below is 115 N/15 mm to 170 N/15 mm in at least one in the MD direction and the TD direction.

### [Method of measuring maximum sealing strength at high temperature when sealed under the condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength of a specimen in at least one of the MD and TD directions is measured after being left at 60°C for 3 minutes by a sealing strength meter, and the measurement is carried under a condition of a test speed of 10 mpm and a grip gap of 30 mm.

A maximum value of the sealing strength measurement values is a maximum sealing strength.

In an exemplary embodiment, the secondary battery pouch film may have a maximum sealing strength parameter of 1.1 or more and 1.8 or less, relating to a maximum sealing strength when sealed under 220°C sealing conditions.

### [Maximum sealing strength parameter]

(the maximum sealing strength in the MD direction at ambient temperature x the maximum sealing strength in the TD direction at ambient temperature) / (the maximum sealing strength in the MD direction at high temperature x the maximum sealing strength in the TD direction at high temperature)

In an exemplary embodiment, the secondary battery pouch film may have a ambient temperature energy of 2.0 to 3.0 KN x mm in the TD direction when sealed under 220°C sealing conditions as measured by the method below.

### [Measurement of ambient temperature energy in TD direction when sealed under condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm, a seal thickness of 10 mm, 2.0 seconds, 0.2 MPa, and a temperature of 220°C.

The sealing strength change is measured by pulling the specimen in the TD direction with the sealing strength meter at ambient temperature, and the measurement is carried under a condition of a test speed of 10 mpm and a grip gap of 30 mm.

When the X-axis is a stroke (distance) of pulling the sealing part in the TD direction and the Y-axis is a sealing strength, an area between the graph for sealing strength change according to the stroke and the X-axis representing the stroke - an integral value of the graph for sealing strength change according to the stroke - is defined as an ambient temperature energy, where the integral value is obtained by integrating the stroke in the range of 0 mm to 20 mm.

In an exemplary embodiment, the secondary battery pouch film may have a high temperature energy in the TD direction when sealed under 220°C sealing conditions as measured by the method below of 1.5 to 2.5 KN x mm.

### [Measurement of high temperature energy in TD direction when sealed under condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm, a seal thickness of 10 mm, 2.0 seconds, 0.2 MPa, and a temperature of 220°C.

The sealing strength change is measured by pulling the specimen in the TD direction with the sealing strength meter at high temperature after being left for 3 minutes at 60°C, and the measurement is carried under a condition of a test speed of 10 mpm and a grip gap of 30 mm.

When the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as a high temperature energy, where the integral value is obtained by integrating the stroke in the range of 0 mm to 20 mm.

In an exemplary embodiment, the secondary battery pouch film may have a difference of 0.4 to 0.6 KN x mm between the ambient temperature energy and the high temperature energy in the TD direction when sealed under 220°C sealing conditions as measured by the method below.

### [Measurement of ambient temperature energy and high temperature energy in the TD direction when sealed under condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The change in the sealing strength is measured by pulling the specimen in the TD direction with the sealing strength meter at ambient temperature or at high temperature after being left for 3 minutes at 60°C, and the measurement is carried under a condition of a test speed of 10 mpm and a grip gap of 30 mm.

When the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as an ambient temperature energy or a high temperature energy, wherein the integral value is obtained by integrating the stroke in the range of 0 mm to 20 mm.

The energy measured at ambient temperature is an ambient temperature energy, and the energy measured at high temperature is a high temperature energy.

In an exemplary embodiment, the secondary battery pouch film may have an ambient temperature maximum stroke in the TD direction of 15 to 25 mm when sealed under 220°C sealing conditions as measured by the method below.

### [Measurement of ambient temperature maximum stroke in TD direction when sealed under condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength change is measured by pulling the specimen in the TD direction with the sealing strength meter at ambient temperature, and the measurement is carried under a condition of a test speed of 10 mpm and a grip gap of 30 mm.

When the X-axis is a stroke (distance) of pulling the sealing part in the TD direction and the Y-axis is the sealing strength, a sealing strength curve increases as the stroke increases, and the stroke (distance) at which the sealing strength value is maximum is evaluated as a maximum stroke.

In an exemplary embodiment, the secondary battery pouch film may have a high temperature maximum stroke in the TD direction of 18 to 24 mm when sealed under 220°C sealing conditions as measured by the method below.

### [Measurement of high temperature maximum stroke in TD direction when sealed under condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength change is measured by pulling the specimen in the TD direction with the sealing strength meter at high temperature after being left for 3 minutes at 60°C, and the measurement is carried under a condition of a test speed of 10 mpm and a grip gap of 30 mm.

When the X-axis is a stroke (distance) of puling the sealing part in the TD direction and the Y-axis is the sealing strength, the sealing strength curve increases as the stroke increases, and the stroke (distance) at which the sealing strength value is maximum is evaluated as the maximum stroke.

In addition, exemplary embodiments of the present disclosure provide a secondary battery encased with the secondary battery pouch film described above.

In an exemplary embodiment, the secondary battery may be for an electric vehicle or energy storage device.

In addition, exemplary embodiments of the present disclosure provide a method for manufacturing a secondary battery including encasing the secondary battery with the secondary battery pouch film described above.

### Advantageous Effects of Invention

The pouch film according to exemplary embodiments of the present disclosure have excellent high temperature long-term reliability upon battery pack manufacture by controlling sealing strength and maximum stroke at ambient temperature and high temperature, and ambient temperature and high temperature energy parameters. These secondary battery pouch films are useful for medium-sized to large-sized secondary batteries, such as those in electric vehicles or energy storage devices, where safety, particularly high temperature safety, is required.

### Brief Description of Drawings

The above and other aspects, features and advantages of the disclosed exemplary embodiments will be more apparent from the following detailed description taken in conjunction with the accompanying drawings in which:
FIG. 1 is a schematic diagram illustrating a secondary battery pouch film configuration prepared by the EC method in an exemplary embodiment of the present disclosure.
FIG. 2A is a schematic diagram of a jig used in the Experiment, and FIG. 2B is a photograph of a battery pack sample coupled to the jig in the Experiment.

### Mode for the Invention

Exemplary embodiments are described more fully hereinafter. The invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. In the description, details of features and techniques may be omitted to more clearly disclose exemplary embodiments.

### Term Definition

In this disclosure, when a secondary battery pouch film includes layer(s), the secondary battery pouch does not necessarily consist of only that layer, and additional layers may be included therein.

In this disclosure, being formed "on" a specific layer includes not only being formed directly on that layer, but also being formed after interposing another additional layer in between.

In this disclosure, a specimen stretches in proportion to an increase in load, but when exceeding the elastic limit, it begins to stretch out of proportion to the load. This point is called a yield point, and a force applied to the yield point is called a yield strength.

In this disclosure, an upper yield strength refers to a maximum value (peak value) of the yield strength. That is, a yield point includes an upper yield point (the point where the yield strength is the maximum among yield points) and a lower yield point (the point where the yield strength is the minimum among yield points). An upper yield strength refers to a maximum value (peak value) of the yield strength at the yield point [i.e., a yield strength at the upper yield point], and a lower yield strength refers to a minimum value of the yield strength at the yield point [i.e., a yield strength at the lower yield point]. Depending on a yield strength measurement target, the upper yield point and lower yield point may be the same.

In this disclosure, an extrusion coating (EC) layer refers to an extrusion coating layer among the sealant layer [hereinafter, referred to as an extrusion layer or an extrusion (EC) layer] wherein a resin such as a polyolefin-based resin has been extrusion-coated for lamination with the barrier layer. The extrusion (EC) layer of the sealant layer is located on the barrier layer side relative to the polypropylene-based resin layer as described below.

In this disclosure, the polypropylene-based resin layer of the sealant layer is a core resin layer that makes up the sealant layer, plays a sealing role, and consists of one or more layers. It is contrasted with the above-described extruded (EC) layer for bonding or laminating with the barrier layer and is located on the inside of the pouch film (i.e., on the opposite side of the barrier layer) relative to the above-described extruded (EC) layer.

In this disclosure, energy refers to an item that evaluates the sealing strength maintenance characteristics, and corresponds to an area in a stroke section (0 to 20mm) of a graph for sealing strength change when measuring the sealing strength change (Y-axis) according to a stroke (distance) [X-axis] of pulling a sealing part, i.e., an integral value of the graph for sealing strength change in the stroke section (0 to 20mm) according to the stroke (distance) [X-axis]. It can be expressed as energy since the integral value is obtained by multiplying the force by the distance.

In this disclosure, a maximum stroke is also an item that can evaluate the sealing strength maintenance characteristics. As the stroke (distance) pulling the sealing part increases, the sealing strength increases, and the stroke (distance) at which the sealing strength value reaches its maximum is called the maximum stroke.

### Description of Exemplary Embodiments

Exemplary embodiments of the present disclosure are described in detail below.

A method for preparing a sealant layer when manufacturing a secondary battery pouch film may include an extrusion lamination and a solvent-dry lamination (hereinafter referred to as SDL).

The SDL is a technique of adhering a barrier layer (metal layer) onto a polypropylene (PP) layer using a solvent-type adhesive and drying the solvent-type adhesive, and a sealant layer produced according to the aforementioned technique is made up of the polypropylene (PP) layer. The solvent-type adhesive may remain in the polypropylene (PP) layer after drying, but since its thickness is about 4*µ*m or less and is insignificant, the thickness may be ignored.

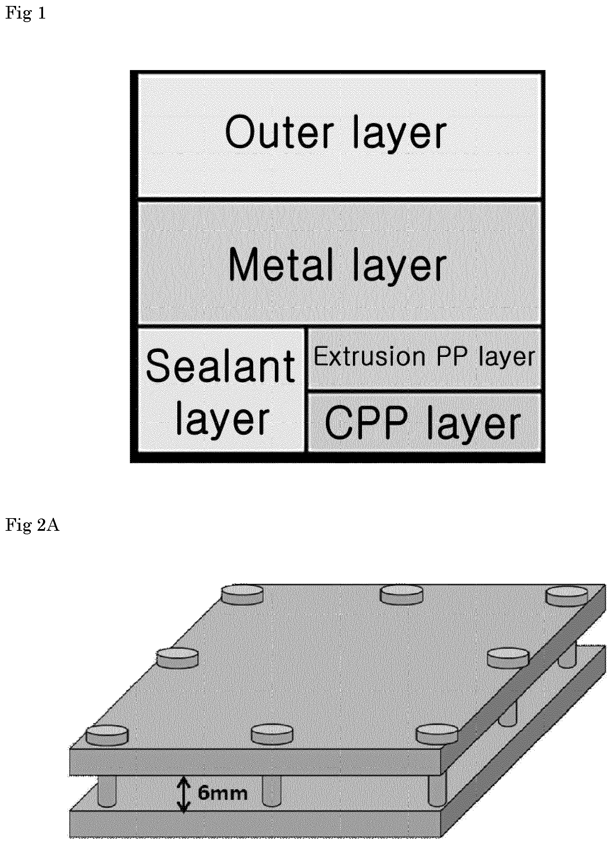

Meanwhile, the extrusion lamination is a technique of extruding a polyolefin based resin, preferably a polypropylene resin, when adhering polypropylene based resin layer, especially cast polypropylene (CPP) resin layer, which is mainly used in the sealant layer, to the barrier layer (metal layer). As a result, the sealant layer is composed of an extrusion coating (EC) layer (mainly an extrusion polypropylene layer) and the polypropylene (PP) layer below the extrusion (EC) layer (inside of the pouch film), preferably the cast polypropylene (CPP) layer (see FIG. 1).

The present inventors conducted repeated research and arrived at the present invention after confirming that the leak test properties associated with battery explosions may be improved by controlling the ambient temperature sealing strength and high temperature sealing strength of a secondary battery pouch film, particularly in an extrusion lamination manufacturing method, and also by controlling factors associated with ambient temperature sealing strength maintenance properties and high temperature sealing strength maintenance properties.

Specifically, in exemplary embodiments of the present disclosure, a secondary battery pouch film comprises a layered structure or a laminate wherein at least an outer layer, a barrier layer and a sealant layer are structured in that order, wherein the sealant layer comprises at least an extrusion (EC) layer and a polypropylene (PP) layer that is a sealing resin layer beneath the extrusion (EC) layer.

The secondary battery pouch film has a ambient temperature measured value of a maximum sealing strength (unit N/15mm) when sealed under 220°C sealing conditions as measured by the method below of 150 N/15mm or more and 205 N/15mm or less in both the MD direction and the TD direction. In this range, the leak test properties associated with battery explosion, as described later, are excellent.

### [Method of measuring maximum sealing strength at ambient temperature when sealed under the condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength of a specimen in each of the MD and TD directions is measured at ambient temperature by a sealing strength meter, and the measurement is carried under a condition of a test speed of 10 mpm and a grip gap of 30 mm.

A maximum value of the sealing strength measurement values is a maximum sealing strength.

In a non-limiting example, the ambient temperature measured value of the maximum sealing strength when sealed under the above 220°C sealing conditions may be 150 N/15mm or more, 155 N/15mm or more, 160 N/15mm or more, 165 N/15mm or more, 170 N/15mm or more, 175 N/15mm or more, 180 N/15mm or more, 185 N/15mm or more, 190 N/15mm or more, 195 N/15mm or more, 200 N/15mm or more in at least one of the MD direction and the TD direction.

In an exemplary embodiment, the secondary battery pouch film has a high temperature measured value (measured after 3 minutes at 60°C) of a maximum sealing strength (unit N/15mm) when sealed under 220°C sealing conditions as measured by the method below, which is 115 N/15mm or more and 170 N/15mm or less in at least one of the MD direction and TD direction. In this range, the leak test properties associated with battery explosion, as described later, are excellent.

In a non-limiting example, the high temperature measured value of the maximum sealing strength when sealed under the above 220°C sealing conditions (measured after 3 minutes at 60°C) may be 115 N/15 mm or more, 120 N/15 mm or more, 125 N/15 mm or more, 130 N/15 mm or more, 135 N/15 mm or more, 140 N/15 mm or more, 145 N/15 mm or more, 150 N/15 mm or more, 155 N/15 mm or more, 160 N/15 mm or more, 165 N/15 mm or more in at least one of the MD direction and TD direction.

### [Measurement method of maximum sealing strength when sealed under 220°C sealing conditions]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The respective sealing strength (load) by pulling the specimen in the MD and TD directions is measured with a sealing strength meter (e.g., SHIMADZU's AGS-X model UTM equipment), and the measurement is carried under a condition of a test speed of 10 mpm and a grip gap of 30 mm. In the case of ambient temperature measurement, it is measured at ambient temperature (25°C), and in the case of high temperature measurement, it is measured after being left for 3 minutes under 60°C conditions. When measuring the sealing strength while pulling the sealing part, the maximum strength is indicated as the maximum sealing strength.

In an exemplary embodiment, the secondary battery pouch film preferably has a maximum sealing strength parameter of 1.1 or more and 1.8 or less when sealed under 220°C sealing conditions. In this range, the leak test properties associated with battery explosion are excellent, as described below.

### [Maximum sealing strength parameter]

(the maximum sealing strength in the MD direction at ambient temperature x the maximum sealing strength in the TD direction at ambient temperature) / (the maximum sealing strength in the MD direction at high temperature x the maximum sealing strength in the TD direction at high temperature)

In a non-limiting example, the maximum sealing strength parameter may be within a range of values between any two of the figures of, for example, 1.1, 1.15, 1.20, 1.25, 1.30, 1.35, 1.40, 1.45, 1.50, 1.55, 1.60, 1.65, 1.70, 1.75, 1.80.

In an exemplary embodiment, the secondary battery pouch film has an ambient temperature energy measured by the method below of 2.0 to 3.0 KN x mm.

In an exemplary embodiment, the secondary battery pouch film has a high temperature energy measured by the method below of 1.5 to 2.5 KN x mm.

In an exemplary embodiment, the difference between the ambient temperature energy and the high temperature energy measured by the method below of the secondary battery pouch film is 0.4 to 0.6 KN x mm.

### [Measurement of ambient temperature energy and high temperature energy]

It is measured according to the sealing strength measurement method described above, and the ambient temperature energy or high temperature energy is the area between the sealing strength graph and the stroke X-axis (i.e., the integral value between the sealing strength graph and the X-axis) at ambient temperature or high temperature (high temperature is measured after being left at 60°C for 3 minutes) with the X-axis as the stroke (distance) pulling the sealing part and the Y-axis as the sealing strength, and the stroke range for the integration is from 0mm to 20mm.

If these ambient temperature and high temperature energy values are met, the leak test properties associated with battery explosion are excellent.

In an exemplary embodiment, the secondary battery pouch film has an ambient temperature maximum stroke of 15 to 25 mm as measured by the method below.

In an exemplary embodiment, the secondary battery pouch film has a high temperature maximum stroke of 18 to 24 mm as measured by the method below.

### [Measuring ambient temperature maximum stroke and high temperature maximum stroke]

It is measured according to the sealing strength measurement method described above, and at ambient temperature or high temperature (high temperature is measured after 3 minutes at 60°C), the X axis is the stroke (distance) pulling the sealing part, and the Y axis is the sealing strength, and the stroke (distance) at which the sealing strength value is maximized when the sealing strength curve increases as the stroke increases is evaluated as the maximum stroke. If evaluated at ambient temperature, it is the ambient temperature maximum stroke, and if evaluated at high temperature, it is the high temperature maximum stroke.

In these ambient temperature and high temperature maximum stroke ranges, the leak test properties associated with battery explosion are excellent.

In an exemplary embodiment, it is preferable that the secondary battery pouch film has a thickness ratio of the polypropylene (PP) layer among the sealant layers greater than 0.5, and the sealant layer, namely the sealant layer comprising the extrusion (EC) layer and the polypropylene (PP) layer, has a yield strength (N/mm² ) in the MD direction of 17.50 to 19.99, more preferably 17.50 to 19.80, and the TD direction (N/mm²) is 17.00 to 19.99, more preferably 17.00 to 19.50, and the sealant layer has a glass transition temperature (Tg) in the range of -20°C to -10°C.

In an exemplary embodiment, the thickness ratio of the polypropylene (PP) layer of the sealant layer may be 0.500 or more, 0.525 or more, 0.550 or more, 0.575 or more, 0.600 or more, 0.625 or more, 0.650 or more, 0.675 or more, 0.700 or more, 0.725 or more, 0.750 or more, or 0.775 or more. Alternatively, it may be 0.800 or less, 0.775 or less, 0.750 or less, 0.725 or less, 0.700 or less, 0.675 or less, 0.650 or less, 0.625 or less, 0.600 or less, 0.575 or less, 0.550 or less, or 0.525 or less.

If the above thickness ratio is less than 0.5, that is, if the thickness of the polypropylene (PP) layer is thinned to less than half the thickness of the sealant layer, it may be difficult to satisfy the above-described ambient temperature and high temperature sealing strength and ambient temperature and high temperature sealing strength maintenance properties (stroke, energy).

Here, a thickness ratio of the polypropylene (PP) layer to the sealant layer of 0.500 or more means that the thickness of the extrusion (EC) layer is less than the thickness of the polypropylene (PP) layer.

The thickness ratio of the polypropylene (PP) layer in the sealant layer may be achieved by selecting the thickness itself of the polypropylene (PP) layer and by controlling the thickness of the extrusion layer (EC) during extrusion of the extruded resin.

In an exemplary embodiment, the upper yield strength (N/mm²) in the MD direction of the sealant layer may be within the range of 17.50 to 19.99, and may also have a numerical range between the following numerical values existing within the range. If the upper yield strength (N/mm²) in the MD direction of the sealant layer is outside the above range, it may be difficult to satisfy the ambient temperature and high temperature sealing strength and the ambient temperature and high temperature sealing strength maintenance properties (stroke, energy) described above.

In a non-limiting example, the upper yield strength (N/mm²) in the MD direction of the sealant layer is 17.50 or more, 17.51 or more, 17.52 or more, 17.53 or more, 17.54 or more, 17.55 or more, 17.56 or more, 17.57 or more, 17.58 or more, 17.59 or more, 17.60 or more, 17.61 or more, 17.62 or more, 17.63 or more or less, 17.64 or more or less, 17.65 or more or less, 17.66 or more or less, 17.67 or more or less, 17.68 or more or less, 17.69 or more or less, 17.70 or more or less, 17.71 or more or less, 17.72 or more or less, 17.73 or more or less, 17.74 or more or less, 17.75 or more or less, 17.76 or more or less, 17.77 or more or less, 17.78 or more or less, 17.79 or more or less, 17.80 or more or less, 17.81 or more or less, 17.82 or more or less, 17.83 or more or less, 17.84 or more or less, 17.85 or more or less, 17.86 or more or less, 17.87 or more or less, 17.88 or more or less, 17.89 or more or less, 17.90 or more or less, 17.91 or more or less, 17.92 or more or less, 17.93 or more or less, 17.94 or more or less, 17.95 or more or less, 17.96 or more or less, 17.97 or more or less, 17.98 or more or less, 17.99 or more or less, 18.00 or more or less, 18.01 or more or less, 18.02 or more or less, 18.03 or more or less, 18.04 or more or less, 18.05 or more or less, 18.06 or more or less, 18.07 or more or less, 18.08 or more or less, 18.09 or more or less, 18.10 or more or less, 18.11 or more or less, 18.12 or more or less, 18.13 or more or less, 18.14 or more or less, 18.15 or more or less, 18.16 or more or less, 18.17 or more or less, 18.18 or more or less, 18.19 or more or less, 18.20 or more or less, 18.21 or more or less, 18.22 or more or less, 18.23 or more or less, 18.24 or more or less, 18.25 or more or less, 18.26 or more or less, 18.27 or more or less, 18.28 or more or less, 18.29 or more or less, 18.30 or more or less, 18.31 or more or less, 18.32 or more or less, 18.33 or more or less, 18.34 or more or less, 18.35 or more or less, 18.36 or more or less, 18.37 or more or less, 18.38 or more or less, 18.39 or more or less, 18.40 or more or less, 18.41 or more or less, 18.42 or more or less, 18.43 or more or less, 18.44 or more or less, 18.45 or more or less, 18.46 or more or less, 18.47 or more or less, 18.48 or more or less, 18.49 or more or less, 18.50 or more or less, 18.51 or more or less, 18.52 or more or less, 18.53 or more or less, 18.54 or more or less, 18.55 or more or less, 18.56 or more or less, 18.57 or more or less, 18.58 or more or less, 18.59 or more or less, 18.60 or more or less, 18.61 or more or less, 18.62 or more or less, 18.63 or more or less, 18.64 or more or less, 18.65 or more or less, 18.66 or more or less, 18.67 or more or less, 18.68 or more or less, 18.69 or more or less, 18.70 or more or less, 18.71 or more or less, 18.72 or more or less, 18.73 or more or less, 18.74 or more, 18.75 or more, 18.76 or more, 18.77 or more, 18.78 or more, 18.78 or less, 18.79 or more, 18.79 or less, 18.80 or more, 18.80 or less, 18.81 or more, 18.81 or less, 18.82 or more, 18.82 or less, 18.83 or more, 18.83 or less, 18.84 or more, 18.84 or less, 18.85 or more, 18.85 or less, 18.86 or more, 18.86 or less, 18.87 or more, 18.87 or less, 18.88 or more, 18.89 or more or less, 18.90 or more or less, 18.91 or more or less, 18.92 or more or less, 18.93 or more or less, 18.94 or more or less, 18.95 or more or less, 18.96 or more or less, 18.97 or more or less, 18.98 or more or less, 18.99 or more or less, 19.00 or more or less, 19.01 or more or less, 19.02 or more or less, 19.03 or more or less, 19.04 or more or less, 19.05 or more, 19.06 or more, 19.07 or more, 19.08 or more, 19.09 or more, 19.10 or more, 19.11 or more, 19.12 or more, 19.13 or more, 19.14 or more, 19.15 or more, 19.16 or more, 19.17 or more, 19.18 or more, 19.19 or more, 19.20 or more, 19.21 or less, 19.22 or less, 19.23 or less, 19.24 or less, 19.25 or less, 19.26 or less, 19.27 or less, 19.28 or less, 19.29 or less, 19.30 or less, 19.31 or less, 19.32 or less, 19.33 or less, 19.34 or less, 19.35 or less, 19.36 or less, 19.37 or less, 19.38 or less, 19.39 or less, 19.40 or less, 19.41 or less, 19.42 or less, 19.43 or less, 19.44 or less, 19.45 or less, 19.46 or less, 19.47 or less, 19.48 or less, 19.49 or less, 19.50 or less, 19.51 or less, 19.52 or less, 19.53 or more or less, 19.54 or more or less, 19.55 or more or less, 19.56 or more or less, 19.57 or more or less, 19.58 or more or less, 19.59 or more or less, 19.60 or more or less, 19.61 or more or less, 19.62 or more or less, 19.63 or more or less, 19.64 or more or less, 19.65 or more or less, 19.66 or more or less, 19.67 or more or less, 19.68 or more or less, 19.69 or more or less, 19.70 or more or less, 19.71 or more or less, 19.72 or more or less, 19.73 or more or less, 19.74 or more or less, 19.75 or more or less, 19.76 or more or less, 19.77 or more or less, 19.78 or more or less, 19.79 or more or less, 19.80 or more or less, 19.81 or more or less, 19.82 or more or less, 19.83 or more or less, 19.84 or more or less, 19.85 or more or less, 19.86 or more or less, 19.87 or more or less, 19.88 or more or less, 19.89 or more or less, 19.90 or more or less, 19.91 or more or less, 19.92 or more or less, 19.93 or more or less, 19.94 or more or less, 19.95 or more or less, 19.96 or more or less, 19.97 or more or less, 19.98 or more or less, or 19.99 or less.

In an exemplary embodiment, the upper yield strength (N/mm²) in the TD direction of the sealant layer may be within the range of 17.00 to 19.99, and may have a numerical range between the following numerical values existing within the range. If the upper yield strength (N/mm² ) in the TD direction of the sealant layer is outside the above range, it may be difficult to satisfy the ambient temperature and high temperature sealing strength and the ambient temperature and high temperature sealing strength maintenance properties (stroke, energy) described above.

In a non-limiting example, the sealant layer has a yield strength (N/mm² ) in the TD direction of 17.00 or more, 17.01 or more or less, 17.02 or more or less, 17.03 or more or less, 17.04 or more or less, 17.05 or more or less, 17.06 or more or less, 17.07 or more or less, 17.08 or more or less, 17.09 or more or less, 17.10 or more or less, 17.11 or more or less, 17.12 or more or less, 17.13 or more or less, 17.14 or more or less, 17.15 or more or less, 17.16 or more, 17.17 or more, 17.18 or more, 17.19 or more, 17.20 or more, 17.21 or more, 17.22 or more, 17.23 or more, 17.24 or more, 17.25 or more, 17.26 or more, 17.27 or more, 17.28 or more, 17.29 or more, 17.30 or more, 17.31 or more, 17.32 or more, 17.33 or more, 17.34 or more, 17.35 or more, 17.36 or more, 17.37 or more, 17.38 or more, 17.39 or more, 17.40 or more, 17.41 or more, 17.42 or more, 17.43 or more, 17.44 or more or less, 17.45 or more or less, 17.46 or more or less, 17.47 or more or less, 17.48 or more or less, 17.49 or more or less, 17.50 or more or less, 17.51 or more or less, 17.52 or more or less, 17.53 or more or less, 17.54 or more or less, 17.55 or more or less, 17.56 or more or less, 17.57 or more or less, 17.58 or more or less, 17.59 or more or less, 17.60 or more or less, 17.61 or more or less, 17.62 or more or less, 17.63 or more or less, 17.64 or more or less, 17.65 or more or less, 17.66 or more or less, 17.67 or more or less, 17.68 or more or less, 17.69 or more or less, 17.70 or more or less, 17.71 or more or less, 17.72 or more or less, 17.73 or more or less, 17.74 or more or less, 17.75 or more or less, 17.76 or more or less, 17.77 or more or less, 17.78 or more or less, 17.79 or more or less, 17.80 or more or less, 17.81 or more or less, 17.82 or more or less, 17.83 or more or less, 17.84 or more or less, 17.85 or more or less, 17.86 or more or less, 17.87 or more or less, 17.88 or more or less, 17.89 or more or less, 17.90 or more or less, 17.91 or more or less, 17.92 or more or less, 17.93 or more or less, 17.94 or more or less, 17.95 or more or less, 17.96 or more or less, 17.97 or more or less, 17.98 or more or less, 17.99 or more or less, 18.00 or more or less, 18.01 or more or less, 18.02 or more or less, 18.03 or more or less, 18.04 or more or less, 18.05 or more or less, 18.06 or more or less, 18.07 or more or less, 18.08 or more or less, 18.09 or more or less, 18.10 or more or less, 18.11 or more or less, 18.12 or more or less, 18.13 or more or less, 18.14 or more or less, 18.15 or more or less, 18.16 or more or less, 18.17 or more or less, 18.18 or more or less, 18.19 or more or less, 18.20 or more or less, 18.21 or more or less, 18.22 or more or less, 18.23 or more or less, 18.24 or more or less, 18.25 or more or less, 18.26 or more or less, 18.27 or more or less, 18.28 or more or less, 18.29 or more or less, 18.30 or more or less, 18.31 or more or less, 18.32 or more or less, 18.33 or more or less, 18.34 or more or less, 18.35 or more or less, 18.36 or more or less, 18.37 or more or less, 18.38 or more or less, 18.39 or more or less, 18.40 or more or less, 18.41 or more or less, 18.42 or more or less, 18.43 or more or less, 18.44 or more or less, 18.45 or more or less, 18.46 or more or less, 18.47 or more or less, 18.48 or more or less, 18.49 or more or less, 18.50 or more or less, 18.51 or more or less, 18.52 or more or less, 18.53 or more or less, 18.54 or more or less, 18.55 or more or less, 18.56 or more or less, 18.57 or more or less, 18.58 or more or less, 18.59 or more or less, 18.60 or more or less, 18.61 or more or less, 18.62 or more or less, 18.63 or more or less, 18.64 or more or less, 18.65 or more or less, 18.66 or more or less, 18.67 or more or less, 18.68 or more or less, 18.69 or more or less, 18.70 or more or less, 18.71 or more or less, 18.72 or more or less, 18.73 or more or less, 18.74 or more or less, 18.75 or more or less, 18.76 or more or less, 18.77 or more or less, 18.78 or more or less, 18.79 or more or less, 18.80 or more or less, 18.81 or more or less, 18.82 or more or less, 18.83 or more or less, 18.84 or more or less, 18.85 or more or less, 18.86 or more or less, 18.87 or more or less, 18.88 or more or less, 18.89 or more or less, 18.90 or more or less, 18.91 or more or less, 18.92 or more or less, 18.93 or more or less, 18.94 or more or less, 18.95 or more or less, 18.96 or more or less, 18.97 or more or less, 18.98 or more or less, 18.99 or more or less, 19.00 or more or less, 19.01 or more or less, 19.02 or more or less, 19.03 or more or less, 19.04 or more or less, 19.05 or more or less, 19.06 or more or less, 19.07 or more or less, 19.08 or more or less, 19.09 or more or less, 19.10 or more or less, 19.11 or more or less, 19.12 or more or less, 19.13 or more or less, 19.14 or more or less, 19.15 or less, 19.16 or less, 19.17 or less, 19.18 or less, 19.19 or less, 19.20 or less, 19.21 or less, 19.22 or less, 19.23 or less, 19.24 or less, 19.25 or more, 19.26 or more, 19.27 or more, 19.28 or more, 19.29 or more, 19.30 or more, 19.31 or more, 19.32 or more, 19.33 or more, 19.34 or more or less, 19.35 or more or less, 19.36 or more or less, 19.37 or more or less, 19.38 or more or less, 19.39 or more or less, 19.40 or more or less, 19.41 or more or less, 19.42 or more or less, 19.43 or more or less, 19.44 or more or less, 19.45 or more or less, 19.46 or more or less, 19.47 or more or less, 19.48 or more or less, 19.49 or more or less, 19.50 or more or less, 19.51 or more or less, 19.52 or more or less, 19.53 or more or less, 19.54 or more or less, 19.55 or more or less, 19.56 or more or less, 19.57 or more or less, 19.58 or more or less, 19.59 or more or less, 19.60 or more or less, 19.61 or more or less, 19.62 or more or less, 19.63 or more or less, 19.64 or more or less, 19.65 or more or less, 19.66 or more or less, 19.67 or more or less, 19.68 or more or less, 19.69 or more or less, 19.70 or more or less, 19.71 or more or less, 19.72 or more or less, 19.73 or more or less, 19.74 or more or less, 19.75 or more or less, 19.76 or more or less, 19.77 or more or less, 19.78 or more or less, 19.79 or more or less, 19.80 or more or less, 19.81 or more or less, 19.82 or more or less, 19.83 or more or less, 19.84 or more or less, 19.85 or more or less, 19.86 or more or less, 19.87 or more or less, 19.88 or more or less, 19.89 or more or less, 19.90 or more or less, 19.91 or more or less, 19.92 or more or less, 19.93 or more or less, 19.94 or more or less, 19.95 or more or less, 19.96 or more or less, 19.97 or more or less, 19.98 or more or less, or 19.99 or less.

In an exemplary embodiment, the sum of the upper yield strength (N/mm²) in the MD direction and the upper yield strength (N/mm²) in the TD direction of the sealant layer is 34.5 or more and 39.9 or less, preferably 34.5 or more and 39 or less, more preferably 34.61 to 38.85.

In an exemplary embodiment, the ultimate strength (N/mm²) in the MD direction of the sealant layer may be greater than the ultimate strength (N/mm²) in the TD direction. Due to the nature of the extrusion coating (EC) process and the nature of the lamination process using a PP layer for the sealant layer, slight elongation may occur in the MD direction (Machine Direction). Therefore, it is thought that the yield strength in the MD direction is greater than in the TD direction (Transverse Direction), where no stretching occurs.

In an exemplary embodiment, the glass transition temperature (Tg) of the sealant layer has a value within the range of -20°C to -10°C, preferably -19°C to -11°C, and may have a numerical range between the following numerical values existing within that range. If the glass transition temperature (Tg) of the sealant layer is outside the above range of -20°C to - 10°C, it may be difficult to satisfy the above-described room and high temperature sealing strength and room and high temperature sealing strength maintenance properties (stroke, energy).

In a non-limiting example, the glass transition temperature (Tg) of the sealant layer is -20°C or more, -19.5°C or more, -19°C or more, -18.5°C or more, -18°C or more, -17.5°C or more, -17°C or more, -16.5°C or more, - 16°C or more, -15.5°C or more, -15°C or more, -14.5°C or more, -14°C or more, -13.5°C or more, -13°C or more, -12.5°C or more, -12°C or more, -11.5°C or more, -11°C or more, or -10.5°C or more. Alternatively, it may be -10°C or less, -10.5°C or less, -11°C or less, -11.5°C or less, -12°C or less, -12.5°C or less, -13°C or less, -13.5°C or less, -14°C or less, -14.5°C or less, -15°C or less, -15.5°C or less, -16°C or less, -16.5°C or less, -17°C or less, -17.5°C or less, -18°C or less, -18.5°C or less.

The upper yield strength and glass transition temperature values may be easily adjustable by a skilled person in the art. As is known in the art, the upper yield strength and glass transition temperature may be determined according to the type of polypropylene (PP) resin in the sealant layer, properties such as softness, and the content of elastomeric additives used in the sealant layer. Therefore, the upper yield strength and glass transition temperature may be controlled by selecting polypropylene and elastomer additives of known appropriate types and properties to have the desired the upper yield strength and glass transition temperature.

In an exemplary embodiment, the outer layer may comprise nylon, polyethylene terephthalate (PET), polybutylene terephthalate (PBT), a blend of nylon and PET (a laminated film of nylon and PET), or the like.

In an exemplary embodiment, the nylon film of the outer layer is preferably 20 pm or more thick and more preferably 25 pm or more thick in terms of formability, but the dielectric breakdown voltage may drop if the nylon film thickness exceeds 30 pm. Therefore, a preferred nylon film thickness may be 20 pm to 30 pm, preferably 25 pm to 30 pm.

In an exemplary embodiment, a thinner thickness of the PET film and a thicker thickness of the nylon film among the outer layers is advantageous for formability. However, a thinner PET film thickness may be disadvantageous in terms of dielectric breakdown voltage, so from this point of view, the PET film is preferably 7 pm to 12 pm.

In an exemplary embodiment, the metal layer may comprise a metal such as aluminum, SUS, copper, or the like.

In an exemplary embodiment, the sealant layer or the cast polypropylene (CPP) film may contain various additives (rubber, elastomer, slip agent, etc.) depending on the requirements.

In an exemplary embodiment, the total thickness of the secondary battery pouch film may be, for example, from 60 to 185 pm. In an exemplary embodiment, the secondary battery pouch film may be greater than or equal to 153 pm or less than or equal to 113 pm.

In an exemplary embodiment, the metal layer thickness may be, for example, 20-80 pm, preferably 40-60 pm.

In an exemplary embodiment, the sealant layer thickness may be, for example, 20-80 pm.

In an exemplary embodiment, the thickness of the cast polypropylene (CPP) layer of the sealant layer may be, for example, 20-80 pm.

In an exemplary embodiment, the thickness of the extruded polypropylene (PP) layer, which is the extrusion (EC) layer of the sealant layer, may be, for example, 0 to 60 pm.

Exemplary embodiments of the present disclosure provide a secondary battery encased with the aforementioned secondary battery pouch film. Such a secondary battery may be, for example, a lithium secondary battery, and in particular, a medium-sized to large-sized secondary battery for an electric vehicle (EV) or energy storage system (ESS), etc.

In addition, exemplary embodiments of the present disclosure provide a method of manufacturing a secondary battery including encasing the secondary battery with the secondary battery pouch film described above.

Exemplary embodiments of the present disclosure are described in more detail in the following examples. The embodiments disclosed herein are illustrated for purposes of illustration only, and embodiments of the present disclosure may be practiced in various forms and the scope of the present disclosure should not be construed as being limited to the embodiments described herein.

### [Experiment]

In the Examples and Comparative Examples, the outer layer is composed of a composite layer of nylon (25 pm) and PET (12 pm) and the metal layer is made of aluminum foil (60 pm). The thicknesses of the extruded layer and the polypropylene (CPP, cast polypropylene) layer in the sealant layer are adjusted as indicated in Table 1 below, and those with a yield strength and Tg values shown in the following table are used. In addition, each yield strength, Tg, and sealing strength are evaluated using the method described below. The total thickness, including the adhesive layer, is 183 pm.

**[Table 1]**

| | Sealant layer thickness | Sealant layer | | CPP layer (film)/Sealant layer Thickness ratio | Direction | Yield strength | MD yield strength + TD yield strength | Sealant layer Tg value |
|---|---|---|---|---|---|---|---|---|
| | | Extruded layer | CPP layer (film) | | | | | |
| Example 1 | 80 | 30 | 50 | 0.625 | MD | 19.36 | 37.65 | -14.37°C |
| | | | | | TD | 18.29 | | |
| Example 2 | 80 | 30 | 50 | 0.625 | MD | 19.22 | 36.53 | -13.41°C |
| | | | | | TD | 17.31 | | |
| Example 3 | 100 | 30 | 70 | 0.7 | MD | 18.71 | 36.17 | -14.23°C |
| | | | | | TD | 17.46 | | |
| Example 4 | 110 | 40 | 70 | 0.64 | MD | 19.24 | 38.09 | -13.95°C |
| | | | | | TD | 18.85 | | |
| Example 5 | 80 | 0 | 80 | 1 | MD | 19.80 | 38.53 | -14.31°C |
| | | | | | TD | 18.73 | | |
| Example 6 | 80 | 30 | 50 | 0.625 | MD | 19.80 | 38.85 | -11.95°C |
| | | | | | TD | 19.05 | | |
| Example 7 | 80 | 30 | 50 | 0.625 | MD | 17.59 | 34.61 | -18.48°C |
| | | | | | TD | 17.02 | | |
| Compara tive Example 1 | 80 | 30 | 50 | 0.625 | MD | 21.62 | 42.1 | -8.29°C |
| | | | | | TD | 20.48 | | |
| Compara tive Example 2 | 80 | 80 | 0 | 0 | MD | 17.03 | 33.76 | -22.64°C |
| | | | | | TD | 16.73 | | |
| Compara tive Example 3 | 80 | 80 | 0 | 0 | MD | 17.12 | 33.81 | -22.51°C |
| | | | | | TD | 16.69 | | |
| Compara tive Example 4 | 80 | 30 | 50 | 0.625 | MD | 21.91 | 42.1 | -8.68°C |
| | | | | | TD | 20.19 | | |
| Compara tive Example 5 | 80 | 50 | 30 | 0.375 | MD | 17.92 | 34.73 | -15.44°C |
| | | | | | TD | 16.81 | | |

### <Yield strength>

Specimen is prepared by delaminating the sealant layer of the pouch film and making the specimen to have a width of 15 mm and length of 100 mm.

The yield strength is measured using the AGS-X model UTM equipment from SHIMADZU, under conditions of a test speed of 50 mph and a grip gap of 30 mm.

A specimen stretches proportionally with the increase in load, and when it exceeds its elastic limit, it begins to stretch out of proportion to the load, which is referred to a yield point. In the case of CPP, there is no lower yield point, so the yield point for CPP is essentially the upper yield point.

### <Tg measurement method>

DSC250 equipment from TA corp. is utilized. The measurement conditions are: measuring up to the temperature of -50°C, and a heating rate of 10°C, and a cooling rate of -20°C. Tg value is calculated through the analysis program (TRIOS) at -50°C, which is an approximate Tg value range of PP.

### <Maximum sealing strength when sealed under 220°C sealing conditions>

Specimen is prepared by making a 100mm X 200mm pouch film, followed by folding in half and sealing, and cutting in a direction perpendicular to the sealing direction to have a width of 15mm.

Sealing conditions are: 200mm width of seal bar x 10mm thickness of seal, 2.0 seconds, 0.2MPa, and temperature of 220°C.

Each sealing strength (load) is measured by pulling the specimen in the MD and TD directions with a sealing strength tester (e.g., AGS-X model UTM equipment from SHIMADZU). The measurement conditions are: 10 mpm test speed and 30 mm grip gap. For the ambient temperature measurement, it is measured at ambient temperature, and in the case of high temperature measurement, it is measured after being left for 3 minutes at 60°C.

The maximum of the measured sealing strength is the maximum sealing strength. In other words, when measuring the sealing strength by pulling the sealing part, the highest strength observed is referred to as the maximum sealing strength.

### <Measurement of ambient temperature energy, high temperature energy, and ambient temperature maximum stroke and high temperature maximum stroke in the TD direction when sealed under 220°C sealing conditions>

To assess the maintenance properties of the sealing strength in the TD direction, ambient temperature energy and high temperature energy are evaluated. For this purpose, the sealing strength is measured for the case of sealing under 220°C sealing conditions as described above at ambient temperature or high temperature (high temperature is measured after 3 minutes at 60°C). Here, the X axis is the stroke (distance) pulling the sealing part in the TD direction, the Y axis is the sealing strength, and the area between the graph of the sealing strength change according to the stroke and the X-axis representing the stroke (i.e., the integral value of the graph of the sealing strength change according to the stroke) is defined as ambient temperature energy (energy in the case of measurement at ambient temperature) or high temperature energy (energy in the case of measurement after being left for 3 minutes at 60°C), and when integrating, the stroke is integrated from 0mm to 20mm.

Meanwhile, the ambient temperature maximum stroke and high temperature maximum stroke are measured to see the maintenance properties of the sealing strength in the TD direction.

In other words, they are measured as described above for the case of sealing under 220°C sealing conditions at ambient temperature or high temperature (high temperature is measured after being left for 3 minutes at 60°C), with the X axis as the stroke (distance) pulling the sealing part in the TD direction and the Y axis as the sealing strength. The stroke (distance) at which the sealing strength value is maximized when the sealing strength curve increases gradually as the stroke increases is evaluated as the maximum stroke. If evaluated at ambient temperature, it is the ambient temperature maximum stroke, and if evaluated at high temperature, it is the high temperature maximum stroke.

As mentioned above, it can be said that the maximum stroke and energy (the integral value between the stroke axis and the sealing strength graph) are important factors for evaluating the sealing strength maintenance characteristics (reliability). In other words, while the maximum sealing strength, which is the peak value, is large, the maximum sealing strength alone cannot indicate the sealing strength maintenance characteristics. However, the maximum stroke value can show how quickly the maximum sealing strength reaches its peak and decreases. Additionally, by evaluating the area (integral value) formed between the stroke and the sealing strength curve, whether the sealing strength is well-maintained, in other words, whether it is reliable can be assessed.

In the case of medium and large-sized batteries such as those used in electric vehicles, many models are formed in the MD direction, and the MD direction sealing characteristics are generally superior to the TD direction sealing characteristics. Therefore, it is more important and focused to measure whether the sealing strength can be maintained in the TD direction (Pouch to Pouch sealing), which has relatively weak sealing properties, than in the MD direction (Tap to Pouch sealing). Thus, the change in sealing strength due to the variation in stroke in the TD direction is measured and is displayed below.

### <Leak test>

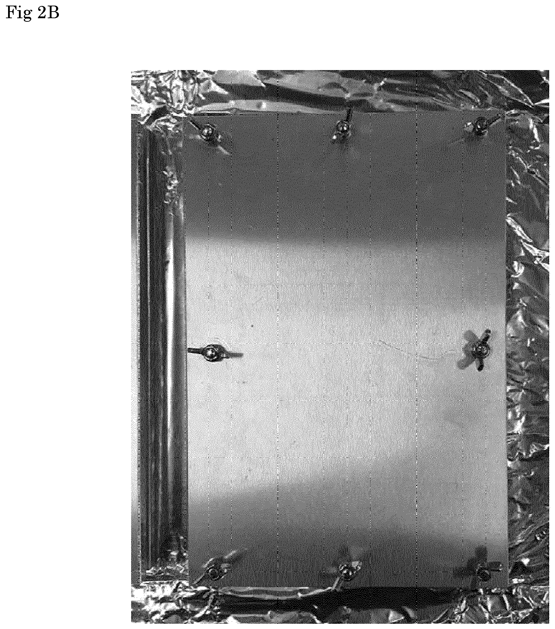

In the Example and Comparative Examples, a total of 20 simple battery pack samples (200mm X 110mm) are prepared after forming the secondary battery pouch film with a forming machine (6mm forming). Tabs (from Sumitomo Corporation) are inserted into the battery pack samples. After inserting the respective simple battery pack sample into the Zig, the upper and lower gap (6mm) of the Zig is fixed and combined. FIG. 2A is a schematic diagram of the Zig used in this experiment, and FIG. 2B is a photograph showing the battery pack sample combined to the Zig in this experiment.

The leakage is evaluated after 90 days under 80°C conditions which representing long-term reliability evaluation, and the number of leakage cases (Fail) out of the total number of 20 cases are measured and presented in Table 4 below.

### <Ambient temperature and high temperature sealing strength, ambient temperature and high temperature sealing strength maintenance characteristics>

Table 2 below shows the maximum sealing strength test results for the Examples and Comparative Examples when sealed under 220°C sealing conditions.

**[Table 2]**

| Sealing strength(N) | Direction | Maximum sealing strength when sealing under 220°C sealing conditions (sealing conditions : 220°C, 2.0 sec) | | |
|---|---|---|---|---|
| | | Ambient temperature | High temperature (60°C/3min) | (Ambient temperature MD maximum sealing strength x Ambient temperature TD maximum sealing strength ) / (High temperature MD maximum sealing strength x High temperature TD maximum sealing strength) |
| Example 1 | MD | 155.4 | 116.3 | 1.70 |
| | TD | 151.6 | 118.9 | |
| Example 2 | MD | 174.3 | 145.6 | 1.38 |
| | TD | 187.2 | 162.2 | |
| Example 3 | MD | 201.3 | 156.9 | 1.77 |
| | TD | 196.6 | 142.9 | |
| Example 4 | MD | 181.5 | 145.8 | 1.49 |
| | TD | 185.4 | 154.6 | |
| Example 5 | MD | 167.5 | 157.5 | 1.13 |
| | TD | 178.4 | 167.2 | |
| Example 6 | MD | 168.1 | 139.7 | 1.54 |
| | TD | 172.4 | 134.5 | |
| Example 7 | MD | 183.2 | 157.5 | 1.32 |
| | TD | 190.1 | 167.8 | |
| Comparative Example 1 | MD | 124.6 | 90.2 | 2.12 |
| | TD | 99.1 | 64.5 | |
| Comparative Example 2 | MD | 113.5 | 111.8 | 1.07 |
| | TD | 113.9 | 108.0 | |
| Comparative Example 3 | MD | 114.1 | 112.5 | 1.06 |
| | TD | 116.1 | 110.6 | |
| Comparative Example 4 | MD | 129.6 | 101.7 | 1.92 |
| | TD | 128.5 | 85.4 | |
| Comparative Example 5 | MD | 183.14 | 132.4 | 1.89 |
| | TD | 192.4 | 141.1 | |

In addition, the respective energy values and maximum strokes at ambient temperature and high temperature of the above sealed pouch are listed in Table 3 as follows.

**[Table 3]**

| | Direct ion | Maximum sealing strength (N) when sealing under 220°C sealing conditions (sealing conditions: 220°C, 2.0 sec) | | Energy (kN x MM) (Integral of sealing strength change over stroke change, with integration performed from stroke 0 to 20 mm) | | | | |
|---|---|---|---|---|---|---|---|---|
| | | Ambient temperatu re | High temperature) 60°C/3min) | Ambient temperature energy | High temperatur e energy (60°C /3min) | Ambient tempera ture max stroke (mm) | High temperatu re max stroke (mm) | Energy (Ambient temperat ure - High temperat ure) |
| Example 1 | TD | 151.6 | 118.9 | 2.31 | 1.78 | 24.9 | 23.55 | 0.53 |
| Example 2 | TD | 187.2 | 162.2 | 2.76 | 2.3 | 18.73 | 23.88 | 0.46 |
| Example 3 | TD | 196.6 | 142.9 | 2.94 | 2.34 | 21.6 | 18.14 | 0.6 |
| Example 4 | TD | 185.4 | 154.6 | 2.82 | 2.2 | 22 | 20.1 | 0.52 |
| Example 5 | TD | 178.4 | 167.2 | 2.4 | 2.34 | 23.4 | 22.1 | 0.42 |
| Example 6 | TD | 172.4 | 134.5 | 2.76 | 2.1 | 15.1 | 18.1 | 0.41 |
| Example 7 | TD | 190.1 | 167.8 | 2.93 | 2.34 | 17.3 | 21.1 | 0.4 |
| Compara tive Example 1 | TD | 99.1 | 64.5 | 1.33 | 1.06 | 4.27 | 8.35 | 0.27 |
| Compara tive Example 2 | TD | 113.9 | 108.0 | 1.51 | 1.19 | 12.18 | 15.47 | 0.32 |
| Compara tive Example 3 | TD | 116.1 | 110.6 | 1.06 | 0.89 | 4.7 | 12.18 | 0.17 |
| Compara tive Example 4 | TD | 128.5 | 85.4 | 1.44 | 1.21 | 5.03 | 13.84 | 0.23 |
| Compara tive Example 5 | TD | 192.4 | 141.1 | 2.84 | 1.4 | 15.6 | 13.4 | 1.44 |

### <High temperature long term reliability characteristics of battery packs - leak test characteristics>

Table 4 shows the leak test measurement results of the above Examples and Comparative Examples.

**[Table 4]**

| | Leak test measurement results [# of leaks (Fail) / total number] |
|---|---|
| Example 1 | 2/20 |
| Example 2 | 1/20 |
| Example 3 | 0/20 |
| Example 4 | 0/20 |
| Example 5 | 1/20 |
| Example 6 | 2/20 |
| Example 7 | 2/20 |
| Comparative Example 1 | 10/20 |
| Comparative Example 2 | 20/20 |
| Comparative Example 3 | 20/20 |
| Comparative Example 4 | 8/10 |
| Comparative Example 5 | 4/20 |

As evident from Tables 3 and 4, the Examples not only exhibit excellent maximum sealing strength values at ambient temperature and high temperature, but also excel in terms of ambient temperature energy, high temperature energy, ambient temperature maximum stroke, and high temperature maximum stroke when compared to the Comparative Examples. This indicates superior sealing strength maintenance characteristics at both ambient temperature and high temperature. In addition, when having the ambient temperature and high temperature sealing strength, stroke properties, and energy properties as the Examples, the number of leaks in the leak test is significantly lower than that of the Comparative Examples. This indicates that the battery pack exhibits excellent high temperature long-term reliability, and consequently, excellent battery safety.

While non-limiting and exemplary embodiments of the present disclosure have been described above, the technical idea of the present disclosure is not limited to the accompanying drawings or the above description. It will be apparent to a skilled person in the art that various modifications are possible without departing from the technical ideas of the present disclosure, and that such modifications fall within the scope of the claims of the present disclosure.

## Claims

1. A secondary battery pouch film,
comprising a layered structure wherein at least an outer layer, a barrier layer, and a sealant layer are structured in that order, wherein the sealant layer is extrusion laminated by an extrusion (EC) layer, and wherein a maximum ambient temperature sealing strength measured value when sealed under 220°C sealing conditions is 150 N/15 mm or more and 205 N/15 mm or less in both the MD and TD directions as measured by a method of measuring maximum sealing strength at ambient temperature when sealed under the condition of sealing at 220°C, wherein in said method of measuring maximum sealing strength at ambient temperature when sealed under the condition of sealing at 220°C,
after producing a secondary battery pouch film in the size of 100 mm x 200 mm, the secondary battery pouch film is folded in half and sealed, and then cut to a size of 15 mm in width in a direction perpendicular to the sealing direction;
the sealing is carried under a sealing condition of a seal bar width of 200 mm x a seal thickness of 10 mm, 2.0 seconds, 0.2 MPa, and a temperature of 220°C;
the sealing strength of a specimen in each of the MD and TD directions is measured at ambient temperature by a sealing strength meter, and the measurement is carried under a condition of a test speed of 10 mpm and a grip gap of 30 mm;
a maximum value of the sealing strength measurement values is a maximum sealing strength.

2. The secondary battery pouch film of claim 1, wherein a maximum high temperature sealing strength measured value (measured value of sealing strength after leaving at 60°C for 3 minutes) when sealed under 220°C sealing conditions is 115 N/15 mm to 170 N/15 mm in at least one in the MD direction and the TD direction as measured by a method of measuring maximum sealing strength at high temperature when sealed under the condition of sealing at 220°C, wherein in said method of measuring maximum sealing strength at high temperature when sealed under the condition of sealing at 220°C,
after producing a secondary battery pouch film in the size of 100 mm x 200 mm, the secondary battery pouch film is folded in half and sealed, and then cut to a size of 15 mm in width in a direction perpendicular to the sealing direction;
the sealing is carried under a sealing condition of a seal bar width of 200 mm x a seal thickness of 10 mm, 2.0 seconds, 0.2 MPa, and a temperature of 220°C;
the sealing strength of a specimen in at least one of the MD and TD directions is measured after being left at 60°C for 3 minutes by a sealing strength meter, and the measurement is carried under a condition of a test speed of 10 mpm and a grip gap of 30 mm;
a maximum value of the sealing strength measurement values is a maximum sealing strength.

3. The secondary battery pouch film of any one of claims 1-2, wherein the secondary battery pouch film has a maximum sealing strength parameter of 1.1 or more and 1.8 or less, relating to a maximum sealing strength when sealed under 220°C sealing conditions, wherein said maximum sealing strength parameter is determined by
(the maximum sealing strength in the MD direction at ambient temperature x the maximum sealing strength in the TD direction at ambient temperature) / (the maximum sealing strength in the MD direction at high temperature x the maximum sealing strength in the TD direction at high temperature).

4. The secondary battery pouch film of any one of claims 1-3, wherein the secondary battery pouch film has a ambient temperature energy in the TD direction of 2.0 to 3.0 KN x mm when sealed under 220°C sealing conditions as measured by a method for measurement of ambient temperature energy in TD direction when sealed under condition of sealing at 220°C, wherein in said method for measurement of ambient temperature energy in TD direction when sealed under condition of sealing at 220°C,
after producing a secondary battery pouch film in the size of 100 mm x 200 mm, the secondary battery pouch film is folded in half and sealed, and then cut to a size of 15 mm in width in a direction perpendicular to the sealing direction;
the sealing is carried under a sealing condition of a seal bar width of 200 mm, a seal thickness of 10 mm, 2.0 seconds, 0.2 MPa, and a temperature of 220°C;
the sealing strength change is measured by pulling the specimen in the TD direction with the sealing strength meter at ambient temperature, and the measurement is carried under a condition of a test speed of 10 mpm and a grip gap of 30 mm;
when the X-axis is a stroke (distance) of pulling the sealing part in the TD direction and the Y-axis is a sealing strength, an area between the graph for sealing strength change according to the stroke and the X-axis representing the stroke - an integral value of the graph for sealing strength change according to the stroke - is defined as an ambient temperature energy, where the integral value is obtained by integrating the stroke in the range of 0 mm to 20 mm.

5. The secondary battery pouch film of any one of claims 1-4, wherein the secondary battery pouch film has a high temperature energy in the TD direction of 1.5 to 2.5 KN x mm when sealed under 220°C sealing conditions as measured by a method for measurement of high temperature energy in TD direction when sealed under condition of sealing at 220°C, wherein in said method for measurement of high temperature energy in TD direction when sealed under condition of sealing at 220°C
after producing a secondary battery pouch film in the size of 100 mm x 200 mm, the secondary battery pouch film is folded in half and sealed, and then cut to a size of 15 mm in width in a direction perpendicular to the sealing direction;
the sealing is carried under a sealing condition of a seal bar width of 200 mm, a seal thickness of 10 mm, 2.0 seconds, 0.2 MPa, and a temperature of 220°C;
the sealing strength change is measured by pulling the specimen in the TD direction with the sealing strength meter at high temperature after being left for 3 minutes at 60°C, and the measurement is carried under a condition of a test speed of 10 mpm and a grip gap of 30 mm;
when the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as a high temperature energy, where the integral value is obtained by integrating the stroke in the range of 0 mm to 20 mm.

6. The secondary battery pouch film of any one of claims 1-5, wherein a difference between an ambient temperature energy and a high temperature energy in the TD direction when sealed under 220°C sealing conditions is 0.4 to 0.6 KN x mm measured by a method for measurement of ambient temperature energy and high temperature energy in the TD direction when sealed under condition of sealing at 220°C, wherein in said method for measurement of ambient temperature energy and high temperature energy in the TD direction when sealed under condition of sealing at 220°C
after producing a secondary battery pouch film in the size of 100 mm x 200 mm, the secondary battery pouch film is folded in half and sealed, and then cut to a size of 15 mm in width in a direction perpendicular to the sealing direction;
the sealing is carried under a sealing condition of a seal bar width of 200 mm x a seal thickness of 10 mm, 2.0 seconds, 0.2 MPa, and a temperature of 220°C;
the change in the sealing strength is measured by pulling the specimen in the TD direction with the sealing strength meter at ambient temperature or at high temperature after being left for 3 minutes at 60°C, and the measurement is carried under a condition of a test speed of 10 mpm and a grip gap of 30 mm;
when the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as an ambient temperature energy or a high temperature energy, wherein the integral value is obtained by integrating the stroke in the range of 0 mm to 20 mm;
the energy measured at ambient temperature is an ambient temperature energy, and the energy measured at high temperature is a high temperature energy.

7. The secondary battery pouch film of any one of claims 1-6, wherein the secondary battery pouch film has an ambient temperature maximum stroke in the TD direction of 15 to 25 mm when sealed under 220°C sealing conditions as measured by
a method for measurement of ambient temperature maximum stroke in TD direction when sealed under condition of sealing at 220°C, wherein in said method for measurement of ambient temperature maximum stroke in TD direction when sealed under condition of sealing at 220°C
after producing a secondary battery pouch film in the size of 100 mm x 200 mm, the secondary battery pouch film is folded in half and sealed, and then cut to a size of 15 mm in width in a direction perpendicular to the sealing direction;
the sealing is carried under a sealing condition of a seal bar width of 200 mm x a seal thickness of 10 mm, 2.0 seconds, 0.2 MPa, and a temperature of 220°C;
the sealing strength change is measured by pulling the specimen in the TD direction with the sealing strength meter at ambient temperature, and the measurement is carried under a condition of a test speed of 10 mpm and a grip gap of 30 mm;
when the X-axis is a stroke (distance) of pulling the sealing part in the TD direction and the Y-axis is the sealing strength, a sealing strength curve increases as the stroke increases, and the stroke (distance) at which the sealing strength value is maximum is evaluated as a maximum stroke.

8. The secondary battery pouch film of any one of claims 1-7, wherein the secondary battery pouch film has a high temperature maximum stroke in the TD direction of 18 to 24 mm when sealed under 220°C sealing conditions as measured by
a method for measurement of high temperature maximum stroke in TD direction when sealed under condition of sealing at 220°C, wherein in said method for measurement of high temperature maximum stroke in TD direction when sealed under condition of sealing at 220°C
after producing a secondary battery pouch film in the size of 100 mm x 200 mm, the secondary battery pouch film is folded in half and sealed, and then cut to a size of 15 mm in width in a direction perpendicular to the sealing direction;
the sealing is carried under a sealing condition of a seal bar width of 200 mm x a seal thickness of 10 mm, 2.0 seconds, 0.2 MPa, and a temperature of 220°C;
the sealing strength change is measured by pulling the specimen in the TD direction with the sealing strength meter at high temperature after being left for 3 minutes at 60°C, and the measurement is carried under a condition of a test speed of 10 mpm and a grip gap of 30 mm;
when the X-axis is a stroke (distance) of puling the sealing part in the TD direction and the Y-axis is the sealing strength, the sealing strength curve increases as the stroke increases, and the stroke (distance) at which the sealing strength value is maximum is evaluated as the maximum stroke.

9. A secondary battery, wherein the battery is encased with the secondary battery pouch film of any one of claims 1 to 8.

10. The secondary battery of claim 9, wherein the secondary battery is for use in an electric vehicle or energy storage device.

11. A method for manufacturing a secondary battery, comprising encasing the secondary battery with the secondary battery pouch film of any one of claims 1 to 8.
